# EUROPÄISCHE PATENTSCHRIFT

(11) **EP 1 855 019 B1**
(45) Veröffentlichungstag und Bekanntmachung des Hinweises auf die Patenterteilung: **29.04.2009**
(21) Anmeldenummer: 07001260.4
(22) Anmeldetag: 20.01.2007
(51) Int. Cl.: F16B 47/00

(54) **Vakuumsaughalter mit Lösestellungsarretierung**
Suction cup with releaseble lock
Ventouse avec verrou debrayable

(30) Priorität: 08.05.2006 DE 202006007395 U
(43) Veröffentlichungstag der Anmeldung: 14.11.2007
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- DE-U1-4202004 017 03
- DE-U1-3202006 007 34
- US-B1- 6 749 160

## Beschreibung

Vakuumsaughalter sind seit langem bekannt und vielfach gebräuchlich. Sie finden in Gestalt von Saugfüßen umfassende Anwendung bei Geräteträgern zur Halterung von Kleincomputern, Navigationsgeräten, Mobiltelefonen und dergl. insbesondere in Kraftfahrzeugen, wo die Innenseite der Windschutzscheibe sich als glatte Fläche zum Anbringen von Saugfußhalterungen anbietet.

Solche Vakuumsaughalter bestehen aus einem Saugergehäuse in Glockenform, dessen Gehäuseraum unten durch eine flexible Saugmembran abgeschlossen ist. Ein Saugerbetätigungsmechanismus umfasst einen Schaft, der mit seinem einen Ende mit dem Mittenbereich der Saugmembran verbunden ist und mit seinem anderen Ende durch eine Führungsöffnung des Saugergehäuses hindurchgeführt und mit einem Betätigungshebel oder einem anderen Betätigungsorgan verbunden ist. Mittels des Betätigungsmechanismus kann die Saugmembran zwischen einer flach liegenden unwirksamen Lösestellung und einer mit ihrem Mittenbereich in das Saugergehäuse hineingezogenen und hineingewölbten Arbeitsstellung bewegt werden, in welche letzterer ein Vakuum zwischen der Anbringungsfläche, beispielsweise einer Windschutzscheibe, und dem in das Saugergehäuse hineingewölbten Teil der Saugmembran erzeugt wird.

Der Betätigungshebel ist meist ein Exzenternockenhebel, der über einen Querstift mit dem Schaft verbunden ist, und dessen Exzenternocken sich auf dem Saugergehäuse abstützt. Es sind aber auch um die Bewegungsachse des Schafts schwenkbare Drehhebel bekannt, die mit einer Rampe zusammenwirken. Meist enthält der Betätigungsmechanismus auch eine Feder in Gestalt einer Schraubendruckfeder, die zwischen dem Saugergehäuse und der Saugmembran oder auf den Schaft wirkend angeordnet ist.

Ein Beispiel eines bekannten Vakuumsaughalters als Saugfuß an einem Schwanenhals-Geräteträger, mit einem Exzenternocken-Betätigungshebel und einer auf den Schaft wirkenden Druckfeder, die im oberen Teil einer am Saugergehäuse angeordneten Schaftführungshülse angeordnet ist, ist aus der EP-1 457 690 B1 bekannt.

Solange es derartige Vakuumsaughalter gibt, solange ist auch ein diesen eigenes Problem bekannt, das bisher nicht gelöst wurde. Dieses Problem besteht darin, daß, wenn eine Saugfußhalterung eine Zeitlang in Gebrauch war, sie nach einem Lösen von der Anbringungsfläche bei erneutem Anbringen nicht mehr richtig hält. Dieses Problem tritt besonders gravierend auf bei der Verwendung an Windschutzscheiben, wo im Gebrauch häufig starke Erwärmung aufgrund von Sonneneinstrahlung hinzukommt. Will man den Saughalter dann erneut anbringen und bringt man die Saugmembran durch Betätigen des Betätigungshebels in ihre Arbeitsstellung, hält der Vakuumsaughalter an der Anbringungsfläche, beispielsweise Windschutzscheibe, nur schlecht, nämlich mit geringer Haltekraft, oder hält womöglich nicht einmal das Eigengewicht des damit ausgestatteten Geräteträgers.

Aufgabe der Erfindung ist es, diesem Problem abzuhelfen.

Dementsprechend beinhaltet die Erfindung einen Vakuumsaughalter, wie er im Anspruch 1 angegeben ist. Vorteilhafte Ausgestaltungen der Erfindung sind Gegenstand der Unteransprüche.

Nach der Erfindung ist also der Betätigungsmechanismus für die Saugmembran mit einer Lösestellungsarretierung ausgestattet, d.h. mit Mitteln zur Arretierung des Betätigungsmechanismus bzw. von Teilen des Betätigungsmechanismus in ihrer der Lösestellung der Saugmembran entsprechenden Position. Denn der Erfindung liegt die Erkenntnis der Problemursache zugrunde, die darin besteht, daß die Saugmembran nach einer gewissen Gebrauchsdauer des Vakuumsaughalters beim Lösen aus der Arbeitsstellung nicht in der flachen Lösestellung bleibt, sondern sich wieder ein Stück weit in Richtung der Arbeitsstellung zurück in das Saugergehäuse hineinbewegt. Dies hat seine Ursache darin, daß im Gebrauch des Vakuumsaughalters, während sich die Saugmembran in ihrer in das Saugergehäuse hineingezogenen Arbeitsstellung, in welcher sie sich unter permanenter mechanischer Spannung befindet, insbesondere unter Wärmeeinwirkung durch Kriechvorgänge im Material bleibend verformt und aufgrund dieser Verformung auch in der Lösestellung die Tendenz hat, sich in das Saugergehäuse hineinzuwölben und dabei den Schaft um ein gewisses Maß in Richtung der Arbeitsstellung zurückzudrücken. Dabei hilft auch die in der Regel vorgesehene, die Membran oder den Schaft in Richtung der Lösestellung vorspannende Feder nicht, da die durch radiale Dehnung verformte elastische Saugmembran sich auch gegen die Federkraft unter gewissen Zusammendrücken der Feder in das Saugergehäuse zurückwölbt. Wird dann in diesem Zustand der Vakuumsaughalter an eine Anbringungsfläche angesetzt und der Betätigungshebel betätigt, befindet sich die Saugmembran schon in der Ausgangsposition in einer in das Saugergehäuse hineingewölbten Position unter Bildung eines luftgefüllten Hohlraums zwischen der Membran und der Anbringungsfläche, so daß beim Bringen der Saugmembran in die Arbeitsstellung durch den Betätigungshebel keine ausreichend große Vergrößerung des Hohlraums zwischen Saugmembran und Anbringungsfläche während der restlichen Bewegung der Saugmembran in deren Arbeitsstellung mehr erfolgt, um ein hinreichend starkes, eine ausreichende Haltekraft bewirkendes Vakuum zu erzeugen.

Die Erfindung löst dieses Problem dadurch, daß Maßnahmen zur Arretierung des Betätigungsmechanismus in der Lösestellung getroffen werden. Denn zum Lösen des Vakuumsaughalters muß der Betätigungshebel oder ein sonstiges Betätigungsorgan vollständig in die Lösestellung bewegt werden, damit die Saugmembran flach an der Anbringungsfläche anliegt und das Lösen ermöglicht wird. Die Lösestellungsarretierung bewirkt dann, daß der Betätigungsmechanismus mit seinen Bauteilen aus der Lösestellung nicht mehr durch die verzogene Membran in Richtung der Arbeitsstellung zurückgedrückt werden können und daher die Membran in ihrer flach liegenden Lösestellung arretiert und festgelegt ist. Wird der Vakuumsaughalter danach wieder an einer Anbringungsfläche angebracht, hat die Saugmembran aufgrund dieser Festlegung ihre flache Position, so daß bei Betätigung des Betätigungsmechanismus unter Überwindung der Lösestellungsarretierung der volle Hubweg der Saugmembran und damit die volle Vakuumerzeugungskapazität zur Verfügung steht. Deshalb wird die volle Haltekraft erzeugt.

Für die praktische Realisierung der Lösestellungsarretierung gibt es zahlreiche Möglichkeiten. Von denen werden nachfolgend einige angesprochen. Es versteht sich, daß sich die Erfindung nicht auf die nachstehend ausdrücklich erwähnten Ausführungsmöglichkeiten beschränkt, da der Fachmann anhand dieser Beschreibung der grundsätzlichen Problemlösung weitere Möglichkeiten ohne erfinderisches Zutun auffinden wird.

Vorteilhafterweise wird die Lösestellungsarretierung durch eine elastische Verrastung eines Elements des Betätigungsmechanismus, beispielsweise des Betätigungshebels, die beim Bewegen des Betätigungshebels oder Betätigungsorgans aus der Lösestellung in die Arbeitsstellung unter gewisser Kraftüberwindung lösbar ist, oder durch ein Verriegelungselement bewerkstelligt, welche eine Verschiebung des Schafts und des damit verbundenen Betätigungshebels oder Betätigungsorgans in Richtung der Schaftachse sperrt.

Beispielsweise kann ein Exzenternocken-Betätigungshebel Gegenelemente haben, die beim Schwenken des Betätigungshebels aus der Arbeitsstellung in die Lösestellung unter fest an einem Bauteil des Saugergehäuses, beispielsweise einer Schaft- und Federführungshülse, angeordneten Anschlagnasen bewegt werden, die dann eine axiale Verschiebung des Betätigungshebels in Richtung der Schaftachse und somit eine axiale Verschiebung des Schafts sperren. Eine solche Anordnung kann noch dadurch gesichert werden, daß eine leichte elastische Rastfunktion realisiert wird, was aufgrund der Materialelastizität bei Kunststoff und Ausführung des Betätigungshebels wie auch des Saugergehäuses aus Kunststoff kein Problem darstellt.

Ebenso ist es möglich, am Betätigungshebel beispielsweise an der Schaft- und Federführungshülse des Saugergehäuses Rastlaschen anzubringen, die den in die Lösestellung geschwenkten Betätigungshebel durch elastische Verrastung arretieren, so daß er weder in Richtung der Schaftachse anhebbar ist noch ohne Überwindung einer Lösekraft in Richtung der Arbeitsstellung geschwenkt werden kann.

Weiter sind, da sowohl der Schaft als auch die Schaftführungshülse bzw. das Saugergehäuse üblicherweise aus Kunststoff gefertigt werden, zwischen dem oberen Ende des Schafts und der Führungshülse eine in Axialrichtung wirkende elastische Verrastung in der Lösestellung vorgesehen sein, beispielsweise in dem am einen Element angeordnete Radialvorsprünge mit radialen Ausnehmungen im anderen Element zusammenwirken, so daß auch hier das Bewegen in die Arbeitsstellung erst wieder durch Überwinden einer nicht unerheblichen Anfangskraft erfolgen kann, die über den Betätigungshebel oder das Betätigungsorgan aus geübt werden muß.

Weiter denkbar sind Ausführungsformen, bei denen mindestens ein federndes Sperrelement, z.B. ein oder zwei federnde Sperrfinger, in der Lösestellung hinter dem Schaftende einrasten, und die vor einem erneuten Umschalten in die Arbeitsstellung durch besondere Betätigung gelöst werden müssen. Solche Lösungen sind aber weniger günstig, da sie die willkürliche Betätigung erforderlich machen und die Entriegelung nicht automatisch beim Betätigen des Betätigungshebels oder Betätigungsorgans erfolgt.

Ein Ausführungsbeispiel der Erfindung wird nachstehend unter Bezugnahme auf die anliegenden Zeichnungen mehr im Einzelnen beschrieben, in denen zeigt:
- Fig. 1: in perspektivischer Ansicht den Saugfuß eines Geräteträgers,
- Fig. 2: den Saugfuß in der Seitenansicht in der Arbeitsstellung, und
- Fig. 3: den Saugfuß in der Seitenansicht in der Lösestellung.

Die Zeichnungsfiguren zeigen einen Saugfuß für einen Geräteträger. Der Saugfuß weist ein glockenförmiges Saugergehäuse 1 auf, das unten durch eine Saugmembran 2 abgeschlossen ist. Am Saugergehäuse 1 ist eine Konsole 3 zum Anschluß eines Schwanenhalses oder dergleichen angeformt. An der Konsole 3 und dem Saugergehäuse 1 ist außerdem eine Führungshülse 4 angeformt, die einen mit seinem unteren Ende mit dem Mittenbereich der Saugmembran 2 verbundenen Schaft und eine oberhalb derselben angeordnete, den Schaft nach unten vorspannende Schraubendruckfeder aufnimmt. Der Schaft und die Feder sind nicht dargestellt, da diese Anordnung bekannt ist, beispielsweise aus der EP-1 457 690 B1. Das obere Ende des Schafts ist über einen Querstift 5 mit einem Betätigungshebel 6 verbunden, dessen mit dem Querstift 5 verbundenes Ende gegabelt ist und jedes Gabelelement als um den Querstift 5 drehbarer Exzenternocken 7 ausgebildet ist.

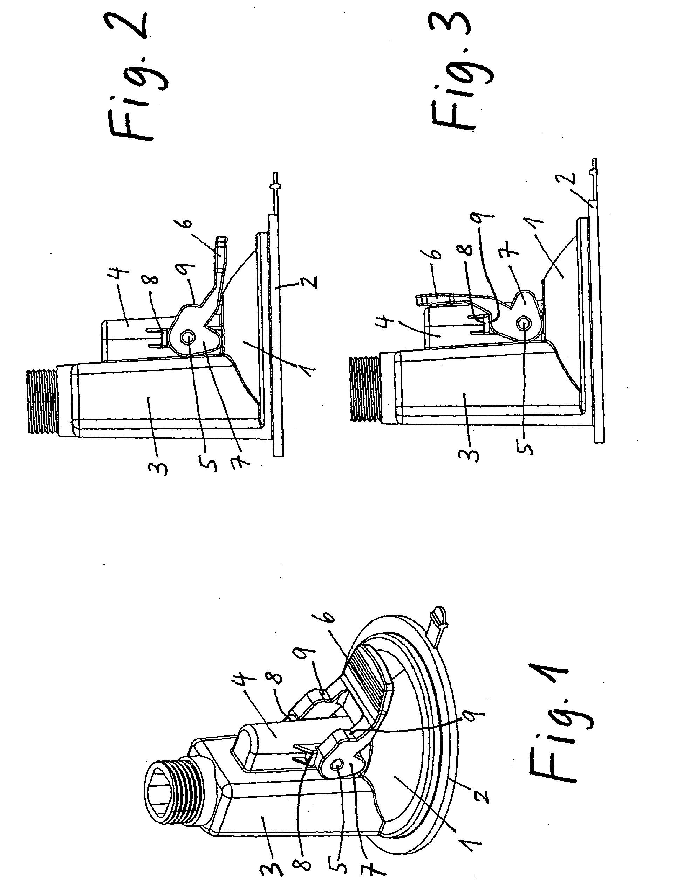

Die Fig. 2 und 3 zeigen Seitenansichten, und zwar Fig. 2 den Betätigungshebel in Arbeitsstellung, also in der Saugstellung, und Fig. 3 den Betätigungshebel in der Lösestellung.

Die Führungshülse 4 ist mit diametral gegenüberliegenden Schlitzen versehen, um die Verschiebebewegung des Querstifts 5 in Axialrichtung der Führungshülse beim Umschalten des Betätigungshebels 6 zwischen seiner Lösestellung und seiner Arbeitsstellung bzw. umgekehrt aufzunehmen. Die Exzenternocken 7 stützen sich auf dem Saugergehäuse 1 ab, und in der Stellung nach Fig. 2 mit heruntergeschwenkten, horizontal liegendem Betätigungshebel 6 stützen sich die Exzenternocken 7 auf dem Saugergehäuse 1 ab und der Querstift 7 befindet sich in größerer Distanz vom Saugergehäuse, der Schaft (nicht sichtbar) ist also nach oben gezogen und daher ist die Saugmembran 2 in das Saugergehäuse 1 hineingezogen. In der Darstellung der Fig. 3 steht der Betätigungshebel 6 in seiner nach oben geschwenkten Lösestellung, so daß der Exzenternocken 7 von der Oberseite des Saugergehäuses 1 weggeschwenkt ist und der Querstift 5 sich näher beim Saugergehäuse befindet, der Schaft (nicht sichtbar) sich also in seiner unteren Stellung und somit die Saugmembran 2 in ihrer flachen Position befindet.

Erfindungsgemäß ist diese Anordnung mit einer Lösestellungsarretierung für den Saugerbetätigungsmechanismus versehen, welch letzterer aus dem Betätigungshebel 6, dem Querstift 5, dem Schaft und der Feder (unsichtbar in der Führungshülse 4) besteht. Diese Lösestellungsarretierung besteht aus zwei beiderseits der Führungshülse 4 an dieser angeformten Arretierungsnasen 8, welche die mit dem Querstift 5 verbundenen Gabelenden des Betätigungshebels 6 übergreifen. In der in Fig. 2 gezeigten Arbeitsstellung haben diese Arretiernasen 8 keine Bedeutung. Wird aber aus der in Fig. 2 dargestellten Arbeitsstellung der Betätigungshebel 6 in seine in Fig. 3 dargestellte Lösestellung geschwenkt, gelangt jeweils eine an den Gabelenden des Betätigungshebels angeformte Sperrfläche 9 unter die betreffende Arretiernase 8, wie Fig. 3 zeigt. Die Anordnung ist vorzugsweise so getroffen, daß hier ein leichtes Rasten erfolgt, was, weil der Betätigungshebel 6 und die Führungshülse 4 mit den Arretiernasen 8 jeweils aus Kunststoff besteht, leicht machbar ist. Durch das Zusammenwirken der Sperrfläche 9 mit den Arretiernasen 8 wird der Saugerbetätigungsmechanismus in der Lösestellung der Saugmembran 2 arretiert. Eine verzogene Saugmembran kann sich daher nicht mehr aufgrund von inneren Eigenspannungen zurück in das Saugergehäuse wölben und dabei den Schaft unter gewisser Zusammendrückung der Feder und damit auch den Betätigungshebel 6 über den Querstift 5 nach oben verschieben, denn eine solche Verschiebung wird durch das Zusammenwirken der Sperrfläche 9 mit den Arretiernasen 8 gesperrt. Die erwähnte leichte Rastung zwischen den Sperrflächen 9 und den Arretiernasen 8 verhindert zusätzlich, daß der Betätigungshebel ohne weiteres aus seiner vertikal stehenden Lösestellung wegschwenken kann.

Die dargestellte Lösung ist verblüffend einfach, und doch stellt ihre Wirkung gegenüber den bisher problembehafteten Vakuumsaughaltern einen ganz erheblichen Fortschritt und Gebrauchsvorteil dar.

## Patentansprüche

1. Vakuumsaughalter mit einem Saugergehäuse (1), das unten durch eine Saugmembran (2) abgeschlossen ist, und einem Saugerbetätigungsmechanismus mit einem mit der Saugmembran (2) verbundenen Schaft und einem mit dem Schaft verbundenen Betätigungsorgan (6), das zwischen einer Lösestellung, in welcher der Schaft abgesenkt und die Saugmembran eine flache Position hat, und einer Arbeitsstellung umschaltbar ist, in welcher der Schaft angehoben und die Saugmembran (2) in das Saugergehäuse hineingezogen ist, wobei der Betätigungsmechanismus eine den Schaft in Richtung der Lösestellung vorspannende Feder aufweisen kann,
**dadurch gekennzeichnet, daß** ein Arretierorgan (8) vorgesehen ist, welches in der Lösestellung des Betätigungsorgans (6) eine Verschiebung des Schafts in Richtung der Arbeitsstellung sperrt.

2. Vakuumsaughalter nach Anspruch 1, wobei das Arretierorgan (8) an einer Sperrfläche (9) des in die Lösestellung geschalteten Betätigungsorgans (6) angreift.

3. Vakuumsaughalter nach Anspruch 2, wobei das Betätigungsorgan (6) ein schwenkbarer Betätigungshebel ist, bei dessen Schwenkbewegung in die Lösestellung eine daran angeordnete Sperrfläche (9) in einen Zusammenwirkungsbereich mit dem Arretierorgan (8) geschwenkt wird.

4. Vakuumsaughalter nach Anspruch 3, wobei das Arretierorgan (8) und die Sperrfläche (9) elastisch rastend miteinander zusammenwirken.

5. Vakuumsaughalter nach Anspruch 3 oder 4, wobei der Betätigungshebel einen sich auf dem Saugergehäuse (1) abstützenden, mit dem Schaft verbundenen Exzenternocken (7) aufweist und die Sperrfläche (9) am Exzenternocken angeordnet ist.

6. Vakuumsaughalter nach Anspruch 5, wobei das Saugergehäuse (1) eine angeformte, den Schaft und ggf. die Feder führende Führungshülse (4) aufweist und ein gegabeltes Ende des Betätigungshebels beiderseits der Führungshülse (4) mit einem Exzenternocken (7) ausgebildet und mit dem Schaft verbunden ist und wobei das Arretierorgan (8) zwei beiderseits der Führungshülse angeordnete Arretiernasen (8) aufweist, die mit jeweils einer an dem betreffenden Exzenternocken angeordneten Sperrfläche (9) zusammenwirken.

## Claims

1. Vacuum suction holder with a suction housing (1), the bottom of which is closed off by a suction membrane (2), and a suction actuating mechanism with a shaft connected to the suction membrane (2) and an actuating member (6) which is connected to the shaft and can be switched over between a release position, in which the shaft is lowered and the suction membrane has a flat position, and a working position, in which the shaft is raised and the suction membrane (2) is drawn into the suction housing, wherein the actuating mechanism can have a spring pre-tensioning the shaft in the direction of the release position,
**characterized in that** an arresting member (8) is provided, which in the release position of the actuating member (6) blocks a displacement of the shaft in the direction of the working position.

2. Vacuum suction holder according to claim 1, wherein the arresting member (8) acts on a blocking surface (9) of the actuating member (6) which is switched into the release position.

3. Vacuum suction holder according to claim 2, wherein the actuating member (6) is a pivotable actuating lever, during the pivoting movement of which into the release position a blocking surface (9) arranged thereon is pivoted into a region of interaction with the arresting member (8).

4. Vacuum suction holder according to claim 3, wherein the arresting member (8) and the blocking surface (9) interact with each other in a resiliently locking manner.

5. Vacuum suction holder according to claim 3 or 4, wherein the actuating lever has an eccentric cam (7) which is supported on the suction housing (1) and connected to the shaft and the blocking surface (9) is arranged on the eccentric cam.

6. Vacuum suction holder according to claim 5, wherein the suction housing (1) has a moulded-on guide sleeve (4) guiding the shaft and if appropriate the spring and a forked end of the actuating lever is embodied on both sides of the guide sleeve (4) with an eccentric cam (7) and connected to the shaft and wherein the arresting member (8) has two arresting lugs (8) which are arranged on both sides of the guide sleeve and interact with in each case a blocking surface (9) arranged on the eccentric cam in question.

## Revendications

1. Support à ventouse comportant un boîtier de ventouse (1), qui est fermé en bas par une membrane aspirante (2), et un mécanisme d'actionnement de ventouse avec une tige reliée à la membrane aspirante (2) et un organe d'actionnement (6) relié à la tige, lequel est commutable entre une position de relâchement dans laquelle la tige est abaissée et la membrane aspirante a une position plate, et une position de travail dans laquelle la tige est levée et la membrane aspirante (2) est rentrée dans le boîtier de ventouse, le mécanisme d'actionnement pouvant présenter un ressort qui précontraint la tige en direction de la position de relâchement,
**caractérisé en ce qu'**il est prévu un organe d'arrêt (8) qui bloque, dans la position de relâchement de l'organe d'actionnement (6), un déplacement de la tige en direction de la position de travail.

2. Support à ventouse selon la revendication 1, dans lequel l'organe d'arrêt (8) est appliqué sur une surface de blocage (9) de l'organe d'actionnement (6) placé dans la position de relâchement.

3. Support à ventouse selon la revendication 2, dans lequel l'organe d'actionnement (6) est un levier d'actionnement pivotant, une surface de blocage (9) disposée de manière adjacente à celui-ci étant pivotée dans une zone de coopération avec l'organe d'arrêt (8) pendant le mouvement de pivotement dudit levier d'actionnement dans la position de relâchement.

4. Support à ventouse selon la revendication 3, dans lequel l'organe d'arrêt (8) et la surface de blocage (9) coopèrent entre eux par un enclenchement élastique.

5. Support à ventouse selon la revendication 3 ou 4, dans lequel le levier d'actionnement présente une came excentrique (7) s'appuyant sur le boîtier de ventouse (1), reliée à la tige, et la surface de blocage (9) est disposée sur la came excentrique.

6. Support à ventouse selon la revendication 5, dans lequel le boîtier de ventouse (1) présente une douille de guidage (4) formée, guidant la tige et le cas échéant le ressort, et une extrémité fourchue du levier d'actionnement est réalisée des deux côtés de la douille de guidage (4) avec une came excentrique (7) et est reliée à la tige et dans lequel l'organe d'arrêt (8) présente deux taquets d'arrêt (8) disposés des deux côtés de la douille de guidage, qui coopèrent respectivement avec une surface de blocage (9) disposée sur la came excentrique correspondante.
